# EUROPÄISCHE PATENTANMELDUNG

(11) **EP 1 894 865 A1**
(43) Veröffentlichungstag der Anmeldung: **05.03.2008**
(21) Anmeldenummer: 06018220.1
(22) Anmeldetag: 31.08.2006
(51) Int. Cl.: B65G 53/28

(54) **Fördervorrichtung für pulverförmiges Gut**

(71) Anmelder: Claudius Peters Technologies GmbH, 21614 Buxtehude (DE)
(72) Erfinder: Peter Hilgraf, 22149 Hamburg (DE)
(74) Vertreter: Glawe, Delfs, Moll

(57) **Zusammenfassung**

Die Erfindung betrifft eine Vorrichtung zum pneumatischen Fördern von Schüttgut (4), insbesondere pulverförmigem Gut, mit einem Förderrohr (1), das einen Förderpfad (2) für das Schüttgut (4) bestimmt, einer Fördergasquelle (51), die an das Förderrohr (1) angeschlossen ist und zum Zuführen von Fördergas in Richtung des Förderpfads (2) ausgebildet ist, und mindestens einer Entnahmestelle (7), über die Gas aus dem Förderrohr (1) abgeführt wird. Erfindungsgemäß ist vorgesehen, dass mehrere Entnahmestellen (7, 7') beabstandet voneinander längs des Förderpfads (2) an dem Förderrohr (1) angeordnet sind, und die Entnahmestellen mengeneinstellbar sind. Die Erfindung erreicht damit ein kontrolliertes Entnehmen von überschüssigem Gas aus dem Förderrohr (1). Die Gasgeschwindigkeit kann dadurch reduziert werden, so dass die Förderung ruhig und stabil bleibt. Die bisher zum Aufrechterhalten einer ruhigen und stabilen Förderung erforderliche stufenweise Vergrößerung des Querschnitts des Förderrohrs (1) entlang des Förderpfads (2) kann damit entfallen.

## Beschreibung

Die Erfindung betrifft eine Vorrichtung zum pneumatischen Fördern von Schüttgut mit einem Förderrohr, das einen Förderpfad für das Schüttgut bestimmt, einer Fördergasquelle, die an das Förderrohr angeschlossen ist und zum Zuführen von Fördergas in Richtung des Förderpfads ausgebildet ist, und mindestens einer Entnahmestelle, über die Gas aus dem Förderrohr abgeführt wird.

Fördervorrichtungen mit geschlossenen Förderleitungen zum Transport von Schüttgut, insbesondere pulverförmigem Gut, sind seit langem bekannt. Um eine Förderung des Guts auch unabhängig von der Schwerkraft vornehmen zu können, ist meist eine Fördergaszufuhreinrichtung vorgesehen. Dazu wird über eine Quelle Fördergas an einem Ende der Förderleitung eingespeist, das in Förderrichtung durch die Förderleitung strömt und dabei das zu fördernde Schüttgut mitnimmt. Bei längeren Förderstrecken oder bei schwierigeren Transportbedingungen reicht es meist nicht aus, nur eine Zufuhr für das Fördergas vorzusehen. Es finden sich daher meist mehrere Zuführungen für das Fördergas entlang der Förderleitung. Zur Verbesserung des Transportverhaltens des Schüttguts ist weiter häufig noch vorgesehen, das Schüttgut zu fluidisieren. Dazu sind entweder vereinzelt oder durchgängig Fluidisiereinrichtungen entlang der Förderleitung angeordnet. Durch sie wird Fluidisiergas zugeführt, um das Schüttgut in einen flüssigkeitsähnlichen Zustand zu versetzen und damit leichter transportierbar zu machen. Das Gasvolumen steigt entlang der Förderstrecke an, und zwar zumindest durch Expansion des Gases und gegebenenfalls zusätzlich noch durch weitere Zuführung von Fördergas und/oder Fluidisiergas entlang der Förderstrecke.

Zur Bewältigung des entlang der Förderstrecke ansteigenden Gasvolumens ist es bekannt, den Querschnitt der Förderleitung sukzessive entlang des Förderpfads zu erhöhen. Damit kann dem steigenden Gasvolumenstrom Rechnung getragen werden, ohne dass es zu einem ungünstigen Anstieg der Gasgeschwindigkeit kommt. Nachteile dieser Anordnung sind, dass sie sehr aufwendig ist, und dass nicht einheitliche Leitungssegmente über die Förderstrecke verwendet werden können, sondern es müssen abschnittsweise immer verschiedene (größer werdende) Segmente bereitgestellt und verbaut werden.

Aus DE-B-1 150 320 ist eine Vorrichtung zum Fördern von pulverförmigem Gut bekannt, bei der an einem Ende der Förderleitung eine Zufuhreinrichtung für Fördergas vorgesehen ist. Weiter ist entlang des Förderrohrs an dem Boden eine Mehrzahl von Fluidisiereinrichtungen angeordnet, über die Fluidisiergas in die Förderleitung eingebracht wird. Der Querschnitt der Förderleitung ist im Wesentlichen konstant. Im Anfangsbereich der Förderleitung ist an deren Oberseite eine Absaugeinrichtung für das Fördergas vorgesehen. Sie dient dazu, am Anfang der Förderleitung einen stärkeren Luftstrom zu erzeugen, so dass gerade an dieser auf Grund der Aufgabe des Schüttguts kritischen Stelle ein höherer Luftstrom zur Verfügung steht. Eine Vergrößerung des Durchmessers längs der Förderleitung ist nicht vorgesehen, das durch die Zufuhr von Fluidisiergas zunehmende Gasvolumen verschlechtert damit die Transporteigenschaften. Es besteht die Gefahr, dass die vorteilhafte Wirkung der Fluidisierung und damit der günstigen Förderung durch das Fördergas verloren geht.

Der Erfindung liegt ausgehend von dem zuletzt genannten Stand der Technik die Aufgabe zu Grunde, eine Fördervorrichtung der eingangs genannten Art zu schaffen, welche die Förderleistungen verbessert und dennoch ohne eine aufwendige Querschnittsvergrößerung entlang der Förderstrecke auskommt.

Die erfindungsgemäße Lösung liegt in den Merkmalen des unabhängigen Anspruchs. Vorteilhafte Weiterbildungen sind Gegenstand der abhängigen Ansprüche.

Erfindungsgemäß ist bei einer Vorrichtung zum pneumatischen Fördern von Schüttgut, insbesondere pulverförmigem Gut, mit einem Förderrohr, das einen Förderpfad für das Schüttgut bestimmt, einer Fördergasquelle, die an das Förderrohr angeschlossen ist und zum Zuführen von Fördergas in Richtung des Förderpfads ausgebildet ist, und mindestens einer entlang des Förderrohrs angeordneten Entnahmestelle, über die Gas aus dem Förderrohr abgeführt wird, vorgesehen, dass mehrere Entnahmestellen beabstandet voneinander längs des Förderpfads an dem Förderrohr angeordnet sind, und die Entnahmestellen mengeneinstellbar sind.

Die Erfindung beruht auf dem Gedanken, überschüssiges Gas, insbesondere Fördergas und/oder Fluidisiergas, aus dem Förderrohr abzuführen. Dadurch wird das Volumen des Gases verringert, so dass auf eine Vergrößerung des Querschnitts der Förderleitung verzichtet werden kann. Die auf Grund des Druckabfalls entlang der Förderleitung unausweichliche Expansion des Gases wird durch die Erfindung so weit abgemildert, dass eine solche Querschnittserweiterung nicht mehr erforderlich ist. Weiter wird gegenüber herkömmlichen Fördervorrichtungen mit konstantem Durchmesser der Förderleitung erreicht, dass kritische Werte für die Aufrechterhaltung der Strömungsförderung vermieden werden. Die Förderung des Schüttguts bleibt ruhig und stabil. Dank der erfindungsgemäßen Entnahme von Gas verhält sich trotz des geschlossenen Förderrohrs die erfindungsgemäße Fördervorrichtung hinsichtlich Stabilität der Förderung ähnlich vorteilhaft wie eine Fließrinne. Der zum Betrieb der Fördervorrichtung erforderliche Energiebedarf ist verringert. Die Förderung des Schüttguts ist außerdem dank der erfindungsgemäßen Gestaltung verschleißarm. Zudem verringert sich der unerwünschte Kornabrieb bzw. die Kornzerstörung im Schüttgut.

### Nachfolgend seien einige verwendete Begriffe erläutert:

Unter einem Förderrohr wird eine geschlossene Leitung verstanden, längs der das zu fördernde Schüttgut transportiert wird. Das Förderrohr kann einen runden oder einen eckigen oder auch einen davon abweichenden beliebig gestalteten Querschnitt aufweisen. Das Förderrohr kann beliebig verlegt sein, insbesondere kann es horizontal, aufwärts geneigt oder auch abwärts geneigt verlaufen.

Unter einer Fördergasquelle wird eine Einrichtung verstanden, mittels der zum Aufbringen einer Vortriebskraft auf das zu fördernde Schüttgut dienendes, längs des Förderpfads strömendes Gas in die Förderleitung eingebracht wird. Insbesondere kann die Fördergasquelle ein aktives Element sein, wie ein Gebläse oder ein Kompressor. Es soll aber nicht ausgeschlossen sein, dass die Fördergasquelle ein passives Element ist, wie eine Zufuhrklappe im Falle einer Förderung mittels eines Saugstroms.

Unter einer Entnahmestelle wird eine Einrichtung verstanden, über die Gas aus dem Förderrohr abgeführt werden kann. Meist ist sie im oberen Querschnittsbereich des Förderrohrs angeordnet, jedoch ist dies nicht zwingend. Unter entlang des Förderrohrs wird eine Anordnung zwischen dem Anfang und dem Ende des Förderrohrs, aber nicht an dem Anfang oder Ende verstanden.

Unter mengeneinstellbar wird verstanden, dass die Größe des entnommenen Gasstroms mittels eines Stellglieds einstellbar ist.

Zweckmäßigerweise ist die Entnahmestelle im oberen Bereich des Querschnitts des Förderrohrs angeordnet, und zwar vorzugsweise im oberen Drittel. Mit dieser Anordnung wird erreicht, dass bei der Entnahme möglichst wenig Material des Schüttguts aufgenommen wird. Je nach Fördergeschwindigkeit oder dem Grad der erreichten Fluidisierung verringert sich der Anteil des Schüttguts nach oben hin.

Weiter sind vorzugsweise die Entnahmestellen in einem Abstand von mindestens dem fünfzigfachen, vorteilhafterweise zwischen dem 75-fachen und dem 150-fachen der Breite des Förderrohrs angeordnet. Es hat sich gezeigt, dass mit einer Anordnung in so großen Abständen noch eine hinreichend große Abfuhr von Fördergas erreicht werden kann.

Zweckmäßigerweise weist die Entnahmestelle eine Trenneinrichtung für Fördergas und Schüttgut auf. Damit wird ein Eintrag von Schüttgut in die entnommene Gasmenge verhindert. Der Gefahr einer Beschädigung von Leitungen, über die das Fördergas abgeführt wird, wird damit entgegengewirkt. Dabei kann die Trenneinrichtung als Lochblech ausgeführt sein. Dies hat den Vorteil einer hohen Robustheit und Verschleißfestigkeit. Es kann aber auch vorgesehen sein, dass die Trenneinrichtung aus einem Gewebematerial ausgeführt ist. Dieses bietet eine feinere Abstufung und damit Trennung. Der Nachteil liegt in der verringerten Verschleißfestigkeit. Zur Abhilfe kann auch vorgesehen sein, die beiden Trenneinrichtungen kombiniert zu verbauen. Auf diese Weise ist es ermöglicht, die Verschleißfestigkeit des Lochblechs mit den guten Trenneigenschaften des Gewebematerials zu verbinden.

Zweckmäßigerweise weist die Entnahmestelle eine Rückspüleinrichtung auf. Mit der Rückspüleinrichtung wird erreicht, dass an der Entnahmestelle beziehungsweise deren Trenneinrichtung anhaftendes Schüttgut entfernt werden kann. Der Gefahr eines Zusetzens der Entnahmestelle wird damit entgegengewirkt.

Gemäß einer besonders bevorzugten Ausführungsform ist eine Mengenregelungseinrichtung vorgesehen, die mit den Entnahmestellen verbunden ist und dazu ausgebildet ist, die Menge des an den einzelnen Entnahmestellen entnommenen Gasstroms zu regeln. Damit kann eine gezielte Entnahme an bestimmten Stellen erfolgen. Die Regelung kann hierbei mit Vorteil abhängig von der Fördergeschwindigkeit in der Förderleitung erfolgen.

Zweckmäßigerweise sind weiter längs des Förderpfads Fluidisierungsstellen angeordnet, an denen Fluidisierungsgas über einen Fluidisierungsgasanschluss zugeführt wird. An diesen Fluidisierungsstellen wird das Schüttgut in einem verflüssigten Zustand gehalten. Der zum Transport erforderliche Energieaufwand verringert sich dadurch. Dabei ist zweckmäßigerweise eine Querspeiseleitung vorgesehen, die eine Entnahmestelle mit dem Fördergasanschluss an einer weiter längs des Förderpfads gelegenen Fluidisierungsstelle verbindet. Damit kann das entnommene Gas einer weiteren Verwendung zugeführt werden, nämlich als Fluidisierungsgas. Der Gasverbrauch für die Fluidisierung des Schüttguts wird dadurch verringert. Es ergibt sich eine günstigere Verfahrensführung.

Es hat sich bewährt, die Entnahmestellen abwechselnd mit Fluidisierungsstellen längs des Förderrohrs anzuordnen. Die wechselweise Abfolge von Gaszufuhr und -abfuhr entlang der Förderleitung bewirkt eine Vergleichmäßigung des Gasstroms.

Die Erfindung wird nachfolgend anhand eines vorteilhaften Ausführungsbeispiels unter Bezugnahme auf die beigefügte Zeichnung erläutert. Es zeigen:
- Fig. 1: ein erstes Ausführungsbeispiel in einer schematischen Ansicht;
- Fig. 2: ein zweites Ausführungsbeispiel in einer schematischen Ansicht; und

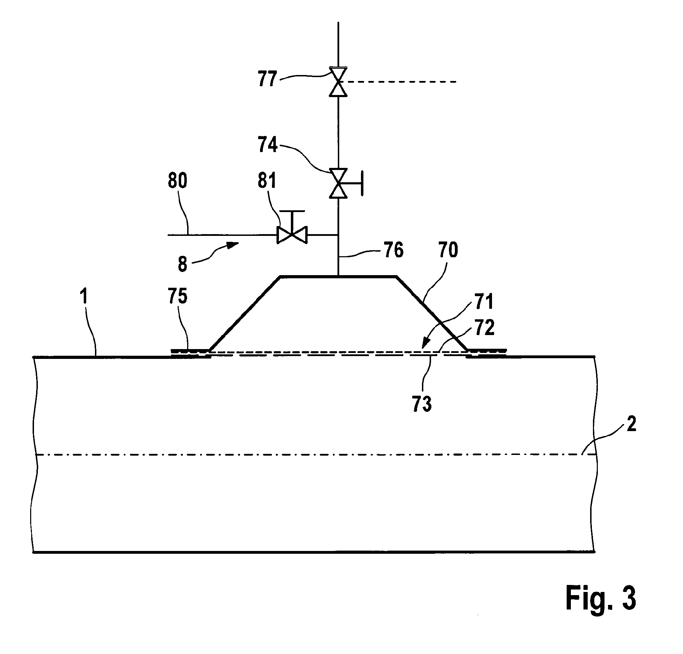

- Fig. 3: eine vergrößerte Darstellung einer Entnahmestelle gemäß der Erfindung.

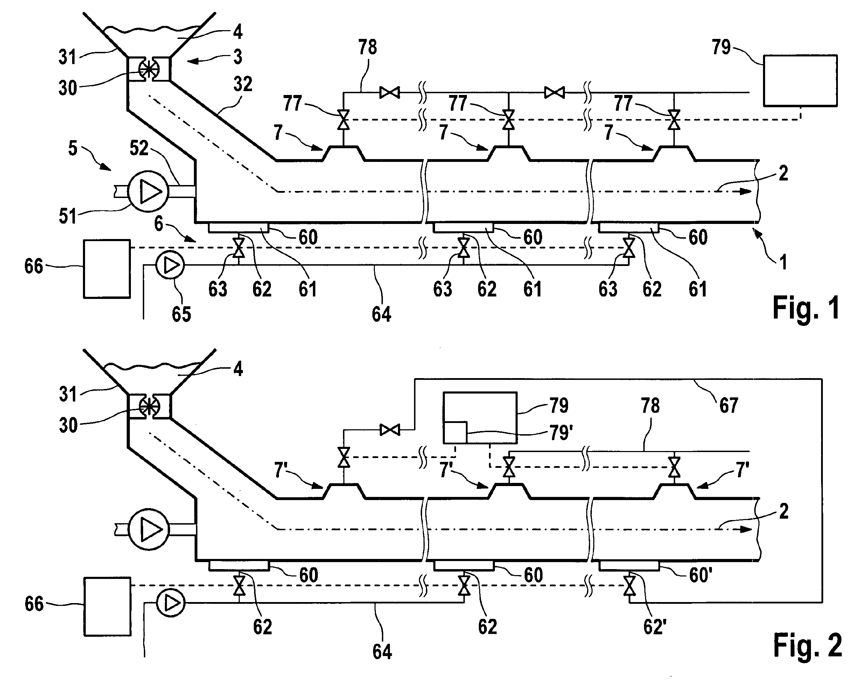

In dem Ausführungsbeispiel gemäß Fig. 1 ist eine pneumatische Fördervorrichtung dargestellt. Sie besteht aus einem langgestreckten Förderrohr 1, das einen Förderpfad 2 definiert. Am Anfang des Förderrohrs 1 ist eine Aufgabestelle 3 für das zu transportierende Schüttgut 4 angeordnet. Sie umfasst einen trichterförmigen Behälter 31, an dessen unteren spitzen Ende eine Zuleitung 32 nach schräg unten zum Anfang des Förderrohrs 1 führt. Mittels dieser Schüttgutaufgabeeinrichtung 3 wird das zu transportierende Schüttgut 4 über eine Druckschleuse 30 in das Förderrohr 3 der Fördervorrichtung eingebracht.

An dem Anfang des Förderrohrs 1 ist eine Zufuhreinrichtung 5 für Fördergas angeordnet. Sie umfasst ein Gebläse 51, welches auf eine nicht näher dargestellte Weise Gas ansaugt, und es über eine kurze Zuleitung 52 am Beginn des Förderrohrs 1 einbläst. Zweckmäßigerweise erfolgt das Einblasen parallel und möglichst koaxial zu dem Förderpfad 2.

Das Förderrohr 1, das lediglich abschnittsweise dargestellt ist, weist ferner eine Fluidisierungseinrichtung 6 auf. Sie umfasst eine Mehrzahl von längs des Förderpfads 2 angeordneten Fluidisiersegmenten 60 am Boden des Förderrohrs 1. Die Segmente weisen einen Hohlraum 61 auf, der über eine gasdurchlässige Membran mit dem Inneren des Förderrohrs 1 verbunden ist. In den Hohlraum 61 wird Fluidisiergas über einen Anschluss 62 zugeführt. Der Anschluss 62 umfasst ein Mengenregelventil 63. Zur Versorgung mit Fluidisiergas ist ein Fluidisiergasgebläse 65 vorgesehen, welches über eine Verteilerleitung 64 das Fluidisiergas zu den Anschlüssen 62 leitet. Zur Steuerung der Zufuhr von Fluidisiergas ist eine mit den Mengenregelventilen 63 zusammenwirkende Steuereinrichtung 66 vorgesehen.

Durch die Zuführung von Fördergas mittels der Fördergaszuführeinrichtung 5 und die abschnittsweise Zuführung von Fluidisiergas mittels der Fluidisiereinrichtung 6 wird entlang des Förderpfads 2 eine stetig ansteigende Gasmenge, die durch Expansion noch zusätzlich an Volumen gewinnt, in das Förderrohr 1 eingebracht.

In dem oberen Bereich des Förderrohrs 1 sind erfindungsgemäß mehrere Entnahmestellen 7 über die Länge des Förderrohrs 1 verteilt angeordnet. Im dargestellten Ausführungsbeispiel weisen sie einen Abstand voneinander auf, der etwa dem hundertfachen des Rohrdurchmessers des Förderrohrs 1 entspricht. Die Entnahmestelle 7 umfasst im Wesentlichen einen wannenartigen Trog 70, der über ein gasdurchlässiges Trennelement 71 mit dem Inneren des Förderrohrs 1 verbunden ist. Das Trennelement 71 kann ein- oder mehrlagig ausgeführt sein. Im dargestellten Ausführungsbeispiel umfasst es ein Gewebe 72 zur Trennung von dem zu entnehmenden Gas von dem Schüttgut 4, welches innerhalb des Förderrohrs 1 verbleiben soll. Zur Stützung des Gewebes 72 und zum besseren Schutz vor mechanischem Verschleiß ist zusätzlich eine Lochplatte 73 zur Verstärkung vorgesehen. Das Gewebe 72 und die Lochplatte 73 sind so bemessen, dass sie die gesamte Weite des Trogs 70 überspannen und durch Klemmung zwischen einem Flansch 75 des Trogs und der Außenseite des Förderrohrs 1 mittels einer geeigneten (nicht dargestellten) Schraubverbindung gasdicht gehaltert sind. Es versteht sich, dass das Förderrohr 1 gegebenenfalls zur besseren Anlage und Abdichtung des Trogs 70 eine entsprechend ausgearbeitete Aufnahme aufweist.

Die Decke des Trogs 70 ist verbunden mit einer Abführleitung 76. Sie umfasst ein Regelventil 77, welches zu einer Sammelleitung 78 führt.

Weiter ist eine Steuereinrichtung 79 vorgesehen, welche auf die Regelventile 77 der einzelnen Entnahmestellen 7 wirkt. Damit ist es ermöglicht, zentral für die einzelnen Entnahmestellen 7 die zu entnehmende Gasmenge zu kontrollieren. Es soll aber nicht ausgeschlossen sein, dass eine dezentrale Einstellung an den einzelnen Regelventilen 77 alternativ oder gegebenenfalls auch zusätzlich vorgesehen ist.

Weiter ist an den Entnahmestellen 7 eine optionale Spüleinrichtung 8 vorgesehen. Sie umfasst eine Zuleitung 80 für Spülgas mit einem ersten Absperrventil 81 sowie ein zweites Absperrventil 74 in der Leitung 76. Die Zuleitung 80 mündet an der Zuleitung 76 zwischen dem zweiten Absperrventil 74 und der Entnahmestelle 7. Im Normalbetrieb ist das erste Absperrventil 81 geschlossen und das zweite Absperrventil 74 geöffnet. Soll eine Spülung der Entnahmestelle 7 erfolgen, so wird die entsprechende Spüleinrichtung 8 betätigt, indem das erste Absperrventil 81 geöffnet und das zweite Absperrventil 74 geschlossen wird. Spülgas strömt dann durch die Leitung 80, das erste Absperrventil 81 und die Leitung 76 in die Entnahmestelle 7, wodurch das Gewebe 72 von Verunreinigungen gereinigt wird. Damit wird einer schleichenden Blockade oder Verstopfung des Gewebes 72 und damit der Entnahmestelle 7 im Rahmen des normalen Betriebs vorgebeugt. Die Spüleinrichtung 8 ist zweckmäßigerweise von einer (nicht dargestellten) Spülsteuereinrichtung kontrolliert.

Die in Fig. 2 dargestellte zweite Ausführungsform stimmt in ihren Grundzügen mit der in Fig. 1 dargestellten ersten Ausführungsform überein. Übereinstimmende Bestandteile tragen dieselben Bezugsziffern. Auf eine Erläuterung ihres Aufbaus und ihrer Funktionsweise wird daher verzichtet. Der Hauptunterschied zwischen den beiden Ausführungsformen besteht darin, dass einige der Entnahmestellen (symbolisiert durch die ganz links in Fig. 2 gelegene) nicht mit der Sammelleitung 78 verbunden sind, sondern über eine Kreuzspeiseleitung 67 jeweils an den Zufuhranschluss 62 eines in Richtung des Förderpfads 2 stromabwärts gelegenen Fluidisierungssegments (hier symbolisiert durch das Fluidisierungssegment 60') angeschlossen ist. Diese Konstruktion nutzt das an der Entnahmestelle 7' abgenommene Gas dazu, es über die Kreuzspeiseleitung 67 der Fluidisierungsstelle 60' als Fluidisiergas zuzuführen. Das Fluidisierungssegment 60' ist dabei so ausgewählt, dass der dort zur Fluidisierung erforderliche Druck des Fluidisiergases höchstens so hoch ist wie der Druck des an der Entnahmestelle 7' entnommenen Gases. Damit ist die Zuführung von gesondertem Fluidisiergas an das Fluidisierungssegment 60' entbehrlich. Es braucht daher nicht extra von dem Fluidisiergebläse 65 bereitgestellt zu werden. Der Betriebsaufwand der Fördervorrichtung verringert sich dadurch. Die übrigen Entnahmestellen 7 sind wie in dem ersten, in Fig. 1 dargestellten Ausführungsbeispiel beschaffen und an die gemeinsame Sammelleitung 78 angeschlossen. Entsprechendes gilt für übrigen Fluidisierungssegmente 60, die wie oben im Zusammenhang mit Fig. 1 erläutert an die Fluidisiergasleitung 64 angeschlossen sind.

Das Vorhandensein der Querspeiseleitung ändert nichts daran, dass die Entnahmestellen 7, 7' von der Steuereinrichtung 79 angesteuert sind. Zweckmäßigerweise weist diese ein zusätzliches Modul 79' auf, welches die Menge des an der Entnahmestelle 7' entnommenen Gases und dessen Einspeisung in die Querspeiseleitung 67 zur Versorgung des Fluidisiersegments 60' kontrolliert. Entsprechend sind die regelbaren Zufuhranschlüsse 62 für das Fluidisiergas mit der Steuereinrichtung 66 für die Fluidisierung verbunden. Das Zusatzsteuermodul 79' kann mit Vorteil weiter dazu ausgebildet sein, eine Synchronisation mit dem Fluidisierungssteuermodul 66 vorzunehmen. Dazu kann eine (nicht dargestellte) Signalleitung vorgesehen sein. Damit kann sichergestellt sein, dass an der Entnahmestelle 7' stets so viel Gas entnommen wird, dass zumindest die zum Betrieb des Fluidisierungssegments 60' erforderliche Menge an dem Zufuhranschluss 62' bereitgestellt ist.

## Patentansprüche

1. Vorrichtung zum pneumatischen Fördern von Schüttgut (4), insbesondere pulverförmigem Gut, mit einem Förderrohr (1), das einen Förderpfad (2) für das Schüttgut (4) bestimmt, einer Fördergasquelle (51), die an das Förderrohr (1) angeschlossen ist und zum Zuführen von Fördergas in Richtung des Förderpfads (2) ausgebildet ist, und mindestens einer entlang des Förderrohrs angeordneten Entnahmestelle (7), über die Gas aus dem Förderrohr (1) abgeführt wird,
**dadurch gekennzeichnet, dass**
mehrere Entnahmestellen (7, 7') beabstandet voneinander längs des Förderpfads (2) an dem Förderrohr (1) angeordnet sind, und die Entnahmestellen (7, 7') mengeneinstellbar sind.

2. Fördervorrichtung nach Anspruch 1,
**dadurch gekennzeichnet, dass**
die Entnahmestellen (7, 7') im oberen Bereich des Querschnitts des Förderrohrs (1) angeordnet sind, vorzugsweise im oberen Drittel.

3. Fördervorrichtung nach Anspruch 1 oder 2,
**dadurch gekennzeichnet, dass**
die Entnahmestellen (7, 7') in einem Abstand von mindestens dem fünfzigfachen, vorzugsweise zwischen dem 75-fachen und 150-fachen des Rohrdurchmessers des Förderrohrs (1) angeordnet sind.

4. Fördervorrichtung nach Anspruche 2 oder 3,
**dadurch gekennzeichnet, dass**
die Entnahmestellen (7, 7') eine Trenneinrichtung (71) für Fördergas und Schüttgut (4) aufweisen.

5. Fördervorrichtung nach Anspruch 4,
**dadurch gekennzeichnet, dass**
die Trenneinrichtung (71) ein Lochblech (73) aufweist.

6. Fördervorrichtung nach Anspruch 4 oder 5,
**dadurch gekennzeichnet, dass**
die Trenneinrichtung (71) ein gasdurchlässiges Gewebematerial (72) aufweist.

7. Fördervorrichtung nach einem der Ansprüche 4 bis 6,
**dadurch gekennzeichnet, dass**
die Entnahmestellen (7, 7') eine Rückspüleinrichtung (8) aufweisen.

8. Fördervorrichtung nach einem der vorangehenden Ansprüche,
**dadurch gekennzeichnet, dass**
eine Mengenregelungseinrichtung (77, 79) vorgesehen ist, die mit den Entnahmestellen (7, 7') verbunden ist und die dazu ausgebildet ist, die Menge des an den einzelnen Entnahmestellen (7, 7') entnommenen Gasstroms zu regeln.

9. Fördervorrichtung nach einem der vorangehenden Ansprüche,
**dadurch gekennzeichnet, dass**
längs des Förderpfads (2) diskontinuierlich Fluidisierungssegmente (60) angeordnet sind, an denen Fluidisierungsgas über einen Zufuhranschluss (62) zugeführt ist.

10. Fördervorrichtung nach Anspruch 9,
**dadurch gekennzeichnet, dass**
eine Querspeiseleitung (67) vorgesehen ist, die eine Entnahmestelle (7') mit dem Fluidisiergaszufuhranschluss (62') eines in Richtung des Förderpfads (2) stromab gelegenen Fluidisiersegments (60') verbindet.

11. Fördervorrichtung nach Anspruch 9 oder 10,
**dadurch gekennzeichnet, dass**
die Entnahmestellen (7, 7') abwechselnd mit den Fluidisierungssegmenten (60, 60') angeordnet sind.
